# EUROPÄISCHE PATENTANMELDUNG

(11) **EP 1 164 523 A2**
(43) Veröffentlichungstag der Anmeldung: **19.12.2001**
(21) Anmeldenummer: 01113105.9
(22) Anmeldetag: 29.05.2001
(51) Int. Cl.: G06F 17/60

(54) **Verfahren und Anordnung zur gesicherten Nutzung eines Dienstes**

(30) Priorität: 08.06.2000 DE 10028349
(71) Anmelder: SIEMENS AKTIENGESELLSCHAFT, 80333 München (DE)
(72) Erfinder: Frank, Michael, Dr., 81371 Muenchen (DE); Rieken, Ralf, Dr., Reston, VA 20190 (US)

(57) **Zusammenfassung**

Die Nutzungssoftware STUB eines Dienstes SERV wird mit zumindest einer Sicherungsfunktion SEC zu einer zumindest teilweise gesicherten Nutzungssoftware STUB (SEC) erweitert. Die Nutzung RMI des Dienstes SERV erfolgt mit Hilfe der erweiterten Nutzungssoftware STUB (SEC). Hierdurch wird - vorzugsweise in Plug & Play Netzen - eine gesicherte Nutzung RMI von Diensten SERV bewirkt.

## Beschreibung

Die Erweiterung von Netzen wird heutzutage üblicherweise zentral administriert. Fügt man ein neues Netzelement hinzu, so muss sichergestellt sein, dass es sich mit den bereits vorhandenen Netzelementen "versteht", dass also eine syntaktisch und semantisch korrekte Schnittstelle zum Netz festgelegt ist und entsprechende Schnittstellentreiber - auch 'Stubs' genannt - zum Einsatz kommen. Die Festlegung derartiger Schnittstellen ist insbesondere zwischen Systemen verschiedener Hersteller meist zeitaufwändig und sehr fehleranfällig, da z.B. Schnittstellen-Treiber üblicherweise nur dann miteinander vernetzt werden können, die auf derselben Schnittstellen-Version basieren.

Ein Konzept zur flexibleren Erweiterung von Netzen ist das sogenannte 'Plug & Play (PnP)', bei dem jedes Netzelement seine Schnittstelle mit Hilfe einer speziellen Schnittstellen-Beschreibungssprache spezifiziert und der Zugriff auf Dienste des Netzelements mit Schnittstellen-Treibern erfolgt, die unter Berücksichtigung der Schnittstellenspezifikation erstellt werden. Eine Anwendung des PnP-Konzepts liegt beispielsweise in den sogenannten Ad-Hoc-Netzen, bei denen Netzelemente unterschiedlicher Hersteller ihre Dienste jeweils denjenigen Netzelementen zur Verfügung stellen, die gerade in das Ad-Hoc-Netz integriert sind, wobei vorab völlig offen ist, welche Schnittstelle die jeweilen Netzelemente aufweisen. Eine Kurzbeschreibung dieses neuartigen Netztyps findet sich in Claudia Piemont, "Geistreiche Verbindungen - Intelligente Geräte in dezentralen Netzen", c't, Heft 20, 1998. Produkte auf dem Gebiet des PnP werden zur Zeit beispielsweise bei Sun (Jini™), Hewlett Packard (JetSend), Lucent (Inferno) oder Microsoft (uPnP = Universal Plug & Play¹) entwickelt.
¹ siehe auch http://www.upnp.org

Im folgenden werden exemplarisch die Jini™ Mechanismen der Firma Sun beschrieben. Dies stellt jedoch keine Einschränkung für die erfindungsgemäßen Mechanismen dar, die allgemein angewendet werden können. Die Architektur und Mechanismen von Jini™ werden in Sun Microsystems, "Jini™ Architectural Overview", Technical White Paper², 01/1999 beschrieben. Ad-hoc Netze, wie das von Jini™, zeichnen sich dadurch aus, dass Netzelemente, und damit auch die von ihnen angebotene Dienste, beliebig in ein Netz eingefügt und wieder aus diesem entfernt werden können.
²siehe auch http://www.sun.com/jini/whitepapers/architecture.pdf

Unter Diensten versteht man eine Instanz, die von einer Person, einem Programm oder einem anderen Dienst benutzt werden kann. Es kann sich z.B. um Hardware, Software, Filter, einen Kommunikationskanal, Speicherplatz und vieles andere mehr handeln. Zur Bearbeitung einer gestellten Gesamtaufgabe kann die Nutzung vieler einzelner Dienste erforderlich sein. Die jeweils gerade vorhandenen und somit nutzbaren Dienste sind in sogenannten Schwarzen Brettern - auch 'Blackboards' bzw. 'Lookup Functions' genannt - registriert.

Von den Schwarzen Brettern wird auch das zeitlich wahlfreie Einfügen und Entfernen von Diensten in das bzw. aus dem Netz gesteuert. Netzelemente können einem Schwarzen Brett ihre Existenz und ihre Dienste mitteilen - auch 'Join' genannt; ein Schwarzes Brett kann auch nach Netzelementen suchen, die Dienste anbieten - auch 'Lookup' bzw. 'Discovery' genannt. Für die Benutzung der Dienste wird ein Leasing-Mechanismus angeboten. Hier wird zwischen den beteiligten Instanzen eine Benutzungsdauer vereinbart, nach deren Ablauf die Ressourcen des benutzten Dienstes wieder freigegeben werden. Die Nutzung von Diensten, und damit die insbesondere hierzu erforderliche Kommunikation, erfolgt z.B. mittels Java Remote Method Invocation (RMI™), die konzeptuell mit den bewährten Remote Procedure Calls (RPC) vergleichbar sind.

Die Jini-Sicherheitsarchitektur ist so gestaltet, dass jedes Dienst einen Eigentümer hat und mit einer Zugriffskontrolle ausgestattet ist - d.h. der Dienst besitzt quasi die Identität seines Eigentümers. Dieser Eigentümer definiert zumindest für diejenigen Dienste, die er dem System zur Verfügung stellt, im allgemeinen auch dessen Nutzungsrechte. Wenn nun ein erster Dienst einen zweiten Dienst nutzt, so erfolgt diese Nutzung mit der Identität des zweiten Dienstes. Ob der Zugriff gestattet wird, hängt von der Zugriffskontrolle des ersten Dienstes ab - siehe hierzu auch Richard Sietmann, "Jini organisiert das Netz selbst", Funkschau, Heft 23, Seite 84, Kapitel "Sicherheit bei Jini", 1. Absatz, 1998. Dieses Konzept erfordert eine dezentrale Administration der Nutzungsrechte. Zudem steht ein Dienst, für den keine Zugriffskontrolle realisiert ist, allen Netzelementen eines Ad-Hoc-Netzes zur Verfügung.

Der Erfindung liegt somit die Aufgabe zugrunde, die gesicherte Nutzung eines Dienstes zu verbessern. Die Aufgabe wird durch die Merkmale des Patentanspruchs 1 gelöst.

Der wesentliche Aspekt der Erfindung besteht in einer gesicherten Nutzung eines Dienstes mit einer Nutzungssoftware, bei dem die Nutzungssoftware mit zumindest einer Sicherungsfunktion zu einer zumindest teilweise gesicherten Nutzungssoftware erweitert wird, und bei dem die Nutzung des Dienstes mit Hilfe der erweiterten Nutzungssoftware erfolgt - Anspruch 1. Einige wesentliche Vorteile der Erfindung seien im folgenden genannt:
- Von dem Ersteller der Nutzungssoftware müssen lediglich die Zugriffsfunktionen als solche realisiert werden, soweit sie für die Nutzung des Dienstes als solchen erforderlich sind. Die Erstellung der Erweiterungssoftware der Sicherungsfunktion kann von unabhängigen Dritten bewirkt werden.
- Es wird grundsätzlich auch für diejenigen Dienste eine Zugriffskontrolle bewirkt, für die ursprünglich keine individuelle Zugriffskontrolle implementiert wurde.
- Es wird sichergestellt, dass keine unberechtigte Nutzung des Dienstes, z.B. durch von unberechtigten Dritten kopierte oder manipulierte Schnittstellenaufrufe, erfolgt.

Entsprechend einer Ausgestaltung des erfindungsgemäßen Verfahrens wird die Erweiterung von einer mit dem Schwarzen Brett assoziierten Erweiterungsfunktion bewirkt - Anspruch 2. Somit wird wegen des zentralen Charakters des Schwarzen Bretts innerhalb des Wirkungsbereichs eines Schwarzen Bretts vorteilhaft eine homogene und konsistente Prüfung bewirkt, sofern zur Erweiterung einheitliche Sicherheitsfunktionen eingesetzt werden.

Gemäß einer Weiterbildung des erfindungsgemäßen Verfahrens wird die erweiterte Nutzungssoftware in einem Schwarzen Brett hinterlegt, von dem sie von einem Dienstnutzer zumindest vor dessen erster Nutzung des Dienstes geladen wird - Anspruch 3. Vorteilhaft entfällt infolge des Ladens der Nutzungssoftware - auch 'Schnittstellentreiber' genannt - bei dem Dienstnutzer die Installation eines dienstspezifischen Schnittstellentreibers zur Nutzung des Dienstes. Somit entfallen auch die eingangs beschriebenen Probleme.

Nach einer Variante des erfindungsgemäßen Verfahrens ist vorgesehen, dass die Hinterlegung in dem Schwarzen Brett nur dann erfolgt, wenn eine Prüfung ergibt, dass die Hinterlegung zulässig ist - Anspruch 4. Gemäß einer Ausgestaltung des erfindungsgemäßen Verfahrens umfasst die Prüfung eine Authentifikation und/oder Autorisierung eines Dienstanbieters, von dem der Dienst und/oder die Nutzungssoftware angeboten wird - Anspruch 5. Somit erscheinen Dienste, die nicht genutzt werden können, nicht mehr in dem Schwarzen Brett, das somit übersichtlicher wird. Zudem kann mit vergleichsweise geringem Aufwand innerhalb des Wirkungsbereichs eines Schwarzen Bretts vorteilhaft eine homogene und konsistente Prüfung bewirkt werden, sofern die für diese Prüfung erforderlichen Daten zentral administriert werden.

Nach einer Weiterbildung des erfindungsgemäßen Verfahrens ist vorgesehen, dass die Erweiterung dann erfolgt, wenn die Prüfung ergibt, dass die Nutzung des Dienstes zulässig ist - Anspruch 6. Somit erfolgt die Erweiterung nur dann, wenn sie erforderlich ist, wodurch unnötige Erweiterungen vermieden werden. Die Leistungsfähigkeit des Schwarzen Bretts wird hierdurch erhöht.

Entsprechend einer Variante des erfindungsgemäßen Verfahrens weist die Nutzungssoftware und/oder die erweiterte Nutzungssoftware ein Format ein Format auf, das von einer virtuellen Maschine ausgeführt wird - Anspruch 7. Somit ist die ggf. erweiterte Nutzungssoftware auf jedem Netzelement benutzbar, auf dem eine auf das Netzelement ausgelegte Version der virtuellen Maschine installiert ist. Die Nutzungssoftware wird somit unabhängig von der konkreten Ausgestaltung der jeweiligen Netzelemente.

Gemäß einer Ausgestaltung des erfindungsgemäßen Verfahrens ist vorgesehen, dass die Sicherungsfunktion zumindest die Authentifikation und/oder die Autorisierung umfasst - Anspruch 8. Nach einer weiteren Ausgestaltung des erfindungsgemäßen Verfahrens wird bei der Sicherungsfunktion durch die Authentifikation die Identität des Dienstnutzers und durch die Autorisierung die Berechtigungen des Dienstnutzers überprüft - Anspruch 9. Somit werden unberechtigte Nutzungen sowie Nutzungen unter Vortäuschung einer falschen Identität verhindert.

Nach einer Weiterbildung des erfindungsgemäßen Verfahrens werden bei der Autorisierung unterschiedliche Gruppen von Dienstnutzern mit unterschiedlichen Nutzungsberechtigungen vorgesehen - Anspruch 10. Hierdurch wird die Nutzung des Dienstes vorteilhaft entsprechend den - z.B. in Organisationen üblicherweise vorkommenden - Nutzergruppen administrierbar.

Entsprechend einer Variante des erfindungsgemäßen Verfahrens wird die Sicherungsfunktion bei jeder Nutzung des Dienstes ausgeführt - Anspruch 11. Somit wird auch nach dem Laden der Nutzungssoftware durch den Dienstnutzer vorteilhaft eine - auch von dem Schwarzen Brett unabhängige - Sicherung der Nutzung des Dienstes in dem Netzelement des Dienstnutzers bewirkt.

Weitere vorteilhafte Ausgestaltungen der Erfindung ergeben sich aus den unter- oder nebengeordneten Ansprüchen.

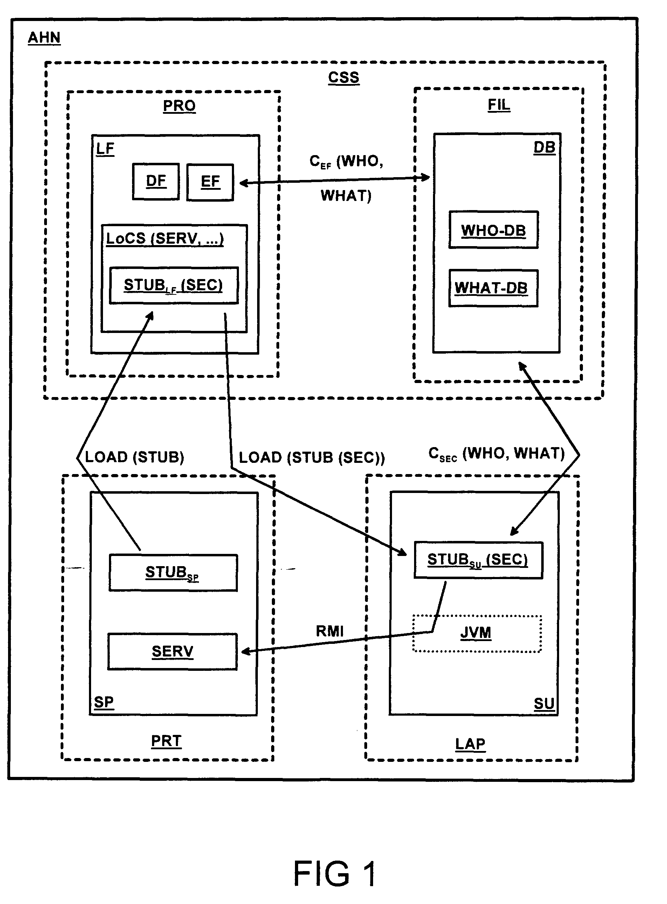

Das erfindungsgemäße Verfahren wird im folgenden anhand von einer Figur näher erläutert. Dabei ist in Figur 1 beispielhaft eine Anordnung dargestellt, in der das erfindungsgemäße Verfahren zum Ablauf kommt, aufweisend:
- einen Dienstanbieter SP mit einem Dienst SERV, der prinzipiell genutzt werden kann, und einer Nutzungssoftware STUB_{SP} zur schnittstellenkonformen Nutzung RMI des Dienstes SERV.
- ein Schwarzes Brett LF mit eine Discovery-Funktion DF zur Detektion von prinzipiell nutzbaren Diensten SERV, einer Erweiterungsfunktion EF zur Erweiterung einer geladenen Nutzungssoftware STUB eines Dienstes SERV um eine Sicherungsfunktion SEC, und einer Liste zulässiger Dienste LoCS, worin der Dienst SERV registriert und dessen Nutzungssoftware STUB_{LF}, ggf. ergänzt um eine Sicherungsfunktion SEC, hinterlegt ist.
- einen Dienstnutzer SU mit einer geladenen Instanz der ergänzten Nutzungssoftware STUB_{SU} (SEC), die von einer virtuellen Maschine JVM ausgeführt wird.
- eine Datenbasis DB, in der eine Authentifikationsdatenbasis WHO-DB und eine Autorisationsdatenbasis WHAT-DB hinterlegt sind.

Zur Darstellung einer möglichen Einbettung der Anordnung zur Durchführung des Verfahrens in ein physikalisches Umfeld ist in Figur 1 beispielhaft der Dienstanbieter SP als Drucker PRT, der Dienstnutzer SU als Laptop LAP und das Schwarze Brett LF als Prozess PRO ausgebildet, der z.B. auf einem zentralen Sicherheitsserver ZSS des Ad-Hoc-Netzes AHN zum Ablauf gelangt. Die Datenbasis DB ist z.B. in den Kontext des Prozesses PRO integriert, indem sie als Datei FIL auf der Festplatte Sicherheitsservers ZSS realisiert ist. Die genannten physikalischen Einrichtungen - auch 'Netzelemente' genannt - bilden ein Ad-Hoc-Netz AHN.

Für ein Ausführungsbeispiel der Erfindung sei angenommen, dass, das der Dienst SERV von dem Dienstnutzer SU genutzt werden soll. Der Dienstnutzer SU sei hierzu mit dem Dienstanbieter SP spontan in dem Ad-Hoc-Netz AHN zusammengeschlossen, in dem zudem zumindest das Schwarze Brett LF vorgesehen ist.

Anfangs sei dem Schwarzen Brett LF der Dienst SERV unbekannt, da z.B. der Dienstanbieter noch nicht in das Ad-Hoc-Netz integriert ist. Nach erfolgter Integration des Dienstes SERV wird dieser von der Discovery-Funktion DF erkannt. Im Anschluss daran wird entsprechend einer Variante der Erfindung eine erfindungsgemäße Prüfung C_{EF} durchgeführt, indem der erkannte Dienst SERV mit Prüfdaten verglichen wird, die in der Datenbasis DB hinterlegt wird. Beispielsweise wird die Identität des Dienstanbieters SP mit einer Authentifikation WHO gegen die Authentifikationsdatenbasis WHO-DB und/oder die Berechtigung des Dienstanbieter, den Dienst SERV auf dem Schwarzen Brett zu registrieren, mit einer Autorisierung WHAT mit Hilfe der Autorisierungsdatenbasis WHAT-DB geprüft. Falls enthält die Autorisierungsdatenbasis WHAT-DB Daten zur Festlegung von Nutzergruppen. Zur Nutzung RMI des Dienstes SERV sind dann nicht nur einzelne Nutzer, sondern auch die Mitglieder von Gruppen berechtigt. Welche Nutzer und Gruppen für welche Dienste SERV berechtigt sind, ergibt sich hierbei aus der Autorisierungsdatenbasis WHAT-DB. Sofern die Prüfung C_{EF} ergibt, dass eine spätere Nutzung RMI des Dienstes SERV zulässig ist, wird der Dienst SERV in die Liste der zulässigen Dienste LoCS eingetragen.

Im Anschluss an die fakultative Prüfung C_{EF} wird gemäß einer Ausgestaltung der Erfindung die Nutzungsschnittstelle STUB des Dienstes SERV mit einer Ladeoperation LOAD geladen und in dem Schwarzen Brett LF, z.B. in der Liste der zulässigen Dienste LoCS, hinterlegt. Erfindungsgemäß wird hierbei die geladene Nutzungssoftware STUB zumindest teilweise um eine Sicherungsfunktion SEC erweitert. Gemäß einer Ausgestaltung der Erfindung wird diese Erweiterung von der Erweiterungsfunktion EF bewirkt. Vorzugsweise erfolgt diese Erweiterung nur dann, wenn die Prüfung C_{EF} ergibt, dass eine Nutzung RMI des Dienstes SERV zulässig ist.

Eine Nutzung RMI des Dienstes SERV durch den Dienstnutzer SU kann erfolgen, sobald der Dienstnutzer SU in das Ad-Hoc-Netz integriert ist. Im Anschluss daran kann durch eine Anfrage bei dem Schwarzen Brett LF_erkannt werden, dass der Dienst SERV in diesem Ad-Hoc-Netz genutzt werden kann. Hierzu lädt der Dienstnutzer SU die im Schwarzen Brett LF hinterlegte erweiterte Nutzungssoftware STUB (SEC). Anschließend kommt sie, z.B. mit Hilfe einer bereits installierten virtuellen Maschine JVM, zum Ablauf. Hierdurch wird die Nutzung RMI des Dienstes SERV durch den Dienstnutzer SU bewirkt.

Gemäß einer Ausgestaltung der Erfindung wird hierbei von der ergänzten Sicherungsfunktion SEC - z.B. bei jeder - Nutzung RMI des Dienstes SERV eine - ggf. nochmalige - Prüfung C_{SEC} der Authentifikation WHO und/oder Autorisierung WHAT des Dienstnutzers SU bewirkt. Somit kann sichergestellt werden, dass keine unberechtigte Nutzung RMI, z.B. durch von unberechtigten Dritten kopierte oder manipulierte Schnittstellenaufrufe, erfolgt.

Abschließend sei der beispielhafte Charakter dieser physikalischen Anordnung betont. Jede beliebige andere Verteilung des Funktionen auf die physikalischen Einrichtung ist möglich. So könnte das Schwarze Brett LF z.B. auch in den Drucker PRT integriert sein, auf dem Laptop LAP vorgesehen werden oder in einem Handy zum Ablauf kommen. Die Datenbasis DB könnte in eine, auch anderen Sicherungsvorgängen dienenden, Sicherungsdatenbank (z.B. eine Userverwaltung einer Netzdomäne) integriert sein. Diese weitgehend wahlfreie Gestaltung der Anordnung wird in Figur 1 durch eine gestrichelte Darstellung der physikalischen Einrichtungen angezeigt.

Zudem sei darauf hingewiesen, dass die Erfindung nicht auf Ad-Hoc-Netze AHN beschränkt ist, sondern in jedem beliebigen Kommunikationsnetz angewandt werden kann, in dem PnP-Konzepte mit Schwarzen Brettern LF zum Einsatz kommen. Beispielsweise ist eine Anwendung vorgesehen in
- Weitverkehrs-Kommunikationsnetzen, wie z.B. dem Internet,
- lokalen Kommunikationsnetzen - auch 'Local Area Network' bzw. 'LAN' genannt,
- virtuellen Kommunikationsnetzen, wie z.B. einem Virtual Private Network - auch 'VPN' genannt.

## Patentansprüche

1. Verfahren zur gesicherten Nutzung (RMI) eines Dienstes (SERV) mit einer Nutzungssoftware (STUB),
mit folgenden Schritten:
- die Nutzungssoftware (STUB) wird mit zumindest einer Sicherungsfunktion (SEC) zu einer zumindest teilweise gesicherten Nutzungssoftware (STUB (SEC)) erweitert,
- die Nutzung (RMI) des Dienstes (SERV) erfolgt mit Hilfe der erweiterten Nutzungssoftware (STUB (SEC)).

2. Verfahren nach Anspruch 1,
**dadurch gekennzeichnet,**
**dass** die Erweiterung von einer mit dem Schwarzen Brett (LF) assoziierten Erweiterungsfunktion (EF) bewirkt wird.

3. Verfahren nach einem der Ansprüche 1 oder 2,
**dadurch gekennzeichnet,**
**dass** die erweiterte Nutzungssoftware (STUB (SEC)) in einem Schwarzen Brett (LF) hinterlegt wird, von dem sie von einem Dienstnutzer (SU) zumindest vor dessen erster Nutzung (RMI) des Dienstes (SERV) geladen wird.

4. Verfahren nach Anspruch 3,
**dadurch gekennzeichnet,**
**dass** die Hinterlegung in dem Schwarzen Brett (LF) nur dann erfolgt, wenn eine Prüfung (C) ergibt, dass die Hinterlegung zulässig ist.

5. Verfahren nach Anspruch 4,
**dadurch gekennzeichnet,**
**dass** die Prüfung (C) eine Authentifikation (WHO) und/oder Autorisierung (WHAT) eines Dienstanbieters (SP) umfasst, von dem der Dienst (SERV) und/oder die Nutzungssoftware (STUB) angeboten wird.

6. Verfahren nach einem der Ansprüche 4 oder 5,
**dadurch gekennzeichnet,**
**dass** die Erweiterung dann erfolgt, wenn die Prüfung (C) ergibt, dass die Nutzung (RMI) des Dienstes (SERV) zulässig ist.

7. Verfahren nach einem der vorhergehenden Ansprüche,
**dadurch gekennzeichnet,**
**dass** die Nutzungssoftware (STUB) und/oder die erweiterte Nutzungssoftware (STUB (SEC)) ein Format aufweist, das von einer virtuellen Maschine (JVM) ausgeführt wird.

8. Verfahren nach einem der vorhergehenden Ansprüche,
**dadurch gekennzeichnet,**
**dass** die Sicherungsfunktion (SEC) zumindest die Authentifikation (WHO) und/oder die Autorisierung (WHAT) umfasst.

9. Verfahren nach Anspruch 8,
**dadurch gekennzeichnet,**
**dass** bei der Sicherungsfunktion (SEC) durch die Authentifikation (WHO) die Identität des Dienstnutzers (SU) und durch die Autorisierung (WHAT) die Berechtigungen des Dienstnutzers (SU) überprüft wird.

10. Verfahren nach einem der Ansprüche 8 oder 9,
**dadurch gekennzeichnet,**
**dass** bei der Autorisierung (WHAT) unterschiedliche Gruppen von Dienstnutzern (SU) mit unterschiedlichen Nutzungsberechtigungen vorgesehen werden.

11. Verfahren nach einem der vorhergehenden Ansprüche,
**dadurch gekennzeichnet,**
**dass** die Sicherungsfunktion (SEC) bei jeder Nutzung (RMI) des Dienstes (SERV) ausgeführt wird.

12. Anordnung zur Durchführung eines der Verfahren nach einem der vorhergehenden Ansprüche.
